# EUROPÄISCHE PATENTSCHRIFT

(11) **EP 2 754 808 B1**
(45) Veröffentlichungstag und Bekanntmachung des Hinweises auf die Patenterteilung: **04.03.2020**
(21) Anmeldenummer: 13198654.9
(22) Anmeldetag: 19.12.2013
(51) Int. Cl.: E05D 5/02, F16B 13/14

(54) **Verfahren zur Befestigung eines Beschlagteils an einem aus Kunststoffhohlprofilabschnitten bestehenden Fenster oder einer Tür**
Method for mounting a fitting element to a window or door made of plastic hollow sections
Procédé de fixation d'une pièce de ferrure sur une fenêtre ou une porte dotée de sections de profilés creux en matière synthétique

(30) Priorität: 10.01.2013 DE 102013100193
(43) Veröffentlichungstag der Anmeldung: 16.07.2014
(73) Patentinhaber: Veka AG, 48324 Sendenhorst (DE)
(72) Erfinder: Drees, Ulrich, 48324 Sendenhorst (DE); Schmitz, Hermann, 48324 Sendenhorst (DE)
(74) Vertreter: Cohausz Hannig Borkowski Wißgott

(56) Entgegenhaltungen:
- EP-A1- 2 476 835
- EP-A2- 0 867 591
- EP-A2- 1 191 175
- DE-A1- 2 447 189
- DE-A1- 3 340 634
- DE-A1- 10 302 490

## Beschreibung

Die Erfindung betrifft ein Verfahren zur Befestigung eines Beschlagteils an einem aus Kunststoffhohlprofilabschnitten bestehenden Fenster oder einer Tür.

An Fenstern oder Türen aus Kunststoffhohlprofilen, genauer gesagt, an den Rahmen oder Flügeln eines solchen Fensters oder einer Tür, müssen Beschlagteile befestigt werden, um das Fenster bzw. die Tür verschließen zu können. Hierbei handelt es sich beispielsweise um Lager, mit denen der Flügel gekippt oder gedreht werden kann, oder um Verschlussteile, mit denen eine Verriegelung von Flügel und Rahmen ermöglicht wird.

Da diese Beschlagteile schon im normalen Gebrauch hohe mechanische Kräfte aufnehmen müssen und darüber hinaus eine Widerstandsfähigkeit gegen gewaltsame Aufbruchversuche gefordert wird, reichen die Auszugskräfte, die mittels selbstschneidender Schrauben in Kunststoffhohlprofilen, welche üblicherweise aus Hart-PVC bestehen, erzielbar sind, in der Regel nicht aus. Es ist daher ein Gegenlager für die Schrauben erforderlich, welches die Schraubenschäfte im Inneren der Hohlkammer hält und ein Ausreißen der Schrauben aus den Befestigungsbohrungen im Kunststoffprofil verhindert. Üblicherweise wird dieses Gegenlager durch die ohnehin zu Aussteifungszwecken in wenigstens eine der Hohlkammern eingeschobenen Verstärkungsprofile aus Metall, insbesondere durch Verstärkungsprofile aus Stahl, gebildet.

Die an sich bewährten metallischen Verstärkungsprofile haben jedoch den Nachteil, dass sie eine Wärmeleitung von der Innen- zur Außenseite des Fensters oder der Tür begünstigen. Um den Wärmewiderstand zu erhöhen, ist es wünschenswert, metallische Verstärkungsprofile zu vermeiden. Es ist beispielsweise bekannt, statt eines metallischen Verstärkungsprofils wenigstens einen der Stege des Kunststoffhohlprofils aus einem glasfaserverstärktem Kunststoff zu bilden oder einen unverstärkten Profilsteg durch eine weitere Lage eines glasfaserverstärkten Kunststoffs zu verstärken. Außerdem kann zur Reduzierung der Wärmeleitung wenigstens eine der Hohlkammern mit einem isolierenden Kunststoffschaum ausgefüllt sein. Jedoch kann eine erhöhte Auszugsfestigkeit der Befestigungsschrauben weder durch eine glasfaserverstärkte Lage erreicht werden, da der Kunststoff dafür zu spröde ist, noch durch einen isolierenden Schaumkern, da dessen Dichte zu gering ist, um einen ausreichenden mechanischen Widerstand gegen das Ausziehen einer Gewindeschraube zu bilden.

Die EP 1 191 175 A2 beschreibt eine Befestigungsanordnung zum Befestigen eines Beschlagteils an einem aus Kunststoffhohlprofilabschnitten bestehenden Fenster oder einer Tür. Allerdings wird dort zur Erhöhung der Stabilität eine Unterlegeplatte eingesetzt, was jedoch nur bei noch offen liegenden Profilenden möglich ist, nicht aber bei weiter vom Ende entfernten Montageorten oder bei bereits zu einem Rahmen zusammengesetzten Profilabschnitten.

Die Aufgabe der vorliegenden Erfindung besteht somit darin, ein Verfahren zur Befestigung von Beschlagteilen an einem aus Kunststoffhohlprofilabschnitten bestehenden Fenster oder an einer Tür anzugeben, durch welches eine erhöhte Schraubenauszugfestigkeit erreicht wird, ohne dass zusätzliche metallische Verstärkungselemente in die Hohlkammer eingesetzt werden müssen.

Diese Aufgabe wird durch ein Verfahren mit den Merkmalen des Anspruchs 1 gelöst.

Es hat sich überraschenderweise gezeigt, dass ein Gegenlagerelement für die Befestigungsschrauben der Beschlagteile auf einfache Weise *in-situ* in den Hohlkammern gefertigt werden kann, indem ein Konstruktionsklebstoff in die Hohlkammer, in welche die Schrauben eintauchen, eingebracht wird, und zwar unmittelbar vor dem Einschrauben der Befestigungsschrauben.

Die Verwendung einer pastösen oder hochviskosen Klebstoffmasse ist notwendig, um zu verhindern, dass die Klebstoffmasse von den vorgesehenen Befestigungspunkten und den Befestigungsschrauben wegfließt.

Erfindungsgemäß ist es zudem notwendig, die Klebstoffmasse in unmittelbarer Nachbarschaft der Befestigungspunkte einzubringen, wenn nicht das Einfüllen direkt durch die Befestigungsbohrungen möglich ist.

Werden also ausreichend große Befestigungsbohrungen in einem vorgeschalteten Schritt geschaffen und besitzen sie einen ausreichenden Durchmesser, um eine Düsenspitze hindurchzuführen, mit der die Klebstoffmasse in die Hohlkammer eingespritzt werden kann, so können diese Befestigungsbohrungen als Einfüllbohrungen verwendet werden.

Werden die Befestigungspunkte hingegen nicht vorgebohrt, so muss wenigstens eine Einfüllbohrung innerhalb des Lochbilds des Beschlagteils eingebracht werden.

"Innerhalb des Lochbilds" bedeutet dabei, dass die Einfüllbohrung zentral, beispielsweise mittig zwischen zwei Befestigungsbohrungen, angeordnet sein kann. Es bedeutet aber auch, dass die Einfüllbohrung in unmittelbarer Nachbarschaft einer Befestigungsbohrung angeordnet sein kann, also mit einer Entfernung von beispielsweise dem 5fachen Schraubenschaftdurchmesser.

Die Anordnung der wenigstens einen Einfüllbohrung im Zentrum des Lochbilds hat jedoch den Vorteil, dass die Einfüllbohrung durch das später aufgesetzte Beschlagteil wieder abgedeckt wird und daher beim fertigen Fenster bzw. bei der fertigen Tür nicht sichtbar ist.

Erfindungswesentlich ist weiterhin, dass die Befestigungsschrauben zuerst eingesetzt werden und die Klebstoffmasse erst danach ausgehärtet wird. Hierdurch greifen die Gewindegänge der Befestigungsschrauben vollständig in die Klebstoffmasse ein und werden davon umschlossen, so dass nach dem Aushärten des Klebstoffs ein klotzförmiges Gegenlagerelement gebildet ist und eine formschlüssige Verankerung besteht.

Werden Reaktionskomponenten zur Bildung eines Klebstoffs im richtigen Mischungsverhältnis eingespritzt, so härtet die Klebstoffmasse nach Ablauf einer gewissen Zeit, der sogenannten Topfzeit, selbstständig aus.

Eine grundsätzlich mögliche Aushärtung einer geeigneten Klebstoffmasse über Wärme- oder UV-Strahlung ist bei dem erfindungsgemäß betroffenen Anwendungsfall der Beschlagmontage im Fenster- oder Türenbau meist nicht möglich oder nicht günstig, da es gerade ein Vorteil des erfindungsgemäßen Verfahrens ist, den Rahmen oder den Flügel vorab aus mehreren Profilabschnitten zusammensetzen zu können und die Montage des Beschlagteils dann schon am fertigen Rahmen bzw. Flügel vorzunehmen. Die Hohlkammer ist für Strahlungsquellen dann nicht mehr zugänglich. Daher werden bevorzugt selbst härtende Reaktionsmassen verwendet.

Die Verwendung eines Zwei-Komponenten-Reaktionsharzes als Klebstoffmasse hat zudem den Vorteil, dass die für den Fenster-oder Türenbau bekannten Konstruktionsklebstoffe bei dem erfindungsgemäßen Verfahren ebenfalls benutzt werden können, um ein Gegenlagerelement innerhalb einer Hohlkammer und unmittelbar unterhalb der für das Beschlagteil vorgesehenen Befestigungsstelle am Profil zu fertigen.

Die mit dem erfindungsgemäßen Verfahren erzielbaren Auszugskräfte für Befestigungsschrauben sind teilweise sogar höher als diejenigen, die mit den herkömmlich eingesetzten metallischen Verstärkungsprofilen erzielbar sind. Bei der Messung der Auszugskräfte ist zu beobachten, dass bei der maximalen ermittelten Auszugkraft oftmals nicht allein die Schraube aus dem durch die Klebstoffmasse gebildeten gegen Gegenlagerelement und der Wandungen des Kunststoffhohlprofils herausgezogen wird, sondern dass es zum Bruch der Profilwandung kommt und das Gegenlagerelement die Profilwandung durchbricht.

Um die in den Hohlraum eingespritzte Klebstoffmasse im Bereich der Befestigungspunkte zu halten, kann es vorteilhaft sein, die an dem Fenster oder an der Tür vorgesehene Befestigungsstelle während der Montage so zu platzieren, dass sie nach unten weist. Damit weist die Fläche im Inneren des Hohlprofils, durch welche die Befestigungsschrauben hindurch treten, nach oben, so dass die dort eingebrachte Klebstoffmasse nicht aufgrund der Gewichtskraft abfließt.

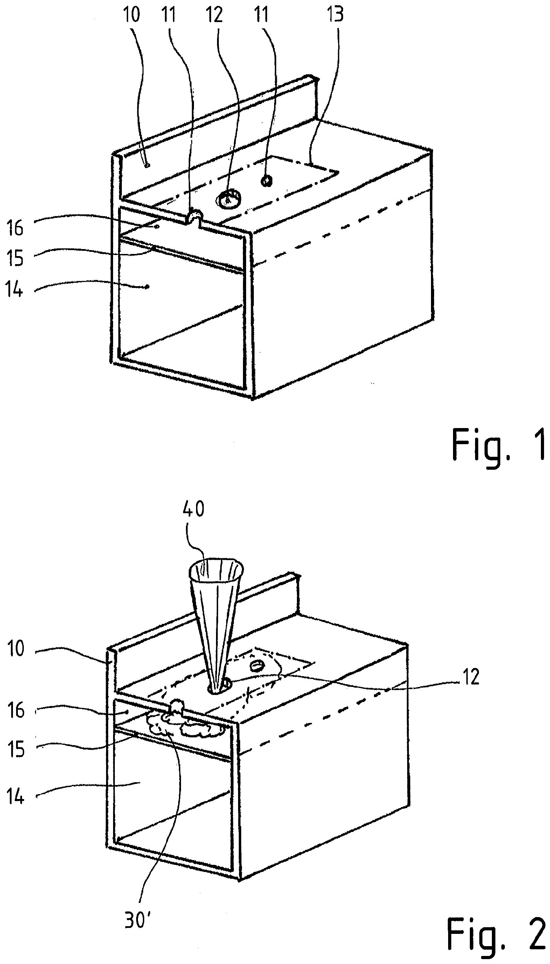

Besonders vorteilhaft ist es jedoch, für die Durchführung des erfindungsgemäßen Verfahrens ein Kunststoffhohlprofil zu verwenden, in welchem unterhalb der für das Beschlagteil vorgesehenen Befestigungsstelle eine Vorkammer ausgebildet ist, die durch einen Zwischensteg von der übrigen Hohlkammer getrennt ist. Der Zwischensteg ist mit einem Abstand zur äußeren Wandung des Kunststoffhohlprofils angeordnet, welcher der Dicke des herzustellenden Gegenlagerelements entspricht. Die Vorkammer kann dann zumindest im Bereich der Befestigungsstelle vollständig mit Klebstoffmasse gefüllt werden. Die Klebstoffmasse kann dabei an zwei gegenüberliegenden, breiten Flächenbereichen und an zwei schmaleren Flächenbereichen haften; im Querschnitt gesehen also an der gesamten z.B. rechteckigen Innenkontur der Vorkammer. Ihre pastöse Konsistenz trägt zusätzlich dazu bei, dass die eingespritzte Klebstoffmasse innerhalb der Vorkammer auch dann nicht axial weg fließt, wenn diese Vorkammer senkrecht im Raum angeordnet ist. Damit entfällt eine Positionierung des Rahmens oder des Flügels vor dem Einspritzen der Klebstoffmasse. Das erfindungsgemäße Verfahren wird nachfolgend unter Bezug auf die Zeichnungen näher erläutert. Die Figuren 1 bis 4 zeigen jeweils einen Schnitt durch ein perspektivisch dargestelltes Kunststoffhohlprofil im Bereich einer für ein Beschlagteil vorgesehenen Befestigungsstelle, und zwar:
- Fig. 1: mit angerissenem Lochbild und eingebrachten Bohrungen;
- Fig. 2: beim Einfüllen einer Klebstoffmasse;
- Fig. 3: beim Befestigen des Beschlagteils und
- Fig. 4: mit dem befestigten Beschlagteil und dem aus ausgehärtetem Klebstoff gebildeten Gegenlagerelement. Zudem zeigt:
- Fig. 5: einen Schnitt durch ein Flügel- und ein Rahmenprofil mit einem Flügellagerelement.

Figur 1 zeigt ein Kunststoffhohlprofil 10, dass hier nur sehr schematisch nach Art eines Fensterrahmenprofils dargestellt ist. Es besitzt eine Hohlkammer 14, die in an sich bekannter Weise noch mit einem nicht dargestellten Isoliermaterial gefüllt sein kann. Zur Optimierung der erfindungsgemäßen Befestigung eines Beschlagteils ist mittels eines Zwischenstegs 15 eine Vorkammer 16 von der Hohlkammer 14 abgetrennt.

Auf der in Figur 1 oben gelegenen Fläche des Kunststoffhohlprofils 10 ist eine Befestigungsstelle 13 für ein Beschlagteil vorgesehen. An der Befestigungsstelle 13 sind in diesem Fall zwei Befestigungsbohrungen 11 bereits vorgebohrt. Bei der Verwendung selbstschneidender Schrauben reicht an den für die Befestigungsbohrungen 11 vorgesehenen Stellen auch die Markierung auf dem Profil bzw. bei der Verwendung von Schraubautomaten die Einprogrammierung der Position für die Schraube, also die Bildung eines virtuellen Lochbilds. Zwischen den Befestigungsbohrungen 11 ist aber immer eine reale Einfüllbohrung 12 eingebracht.

In Figur 2 ist dargestellt, wie durch die Einfüllbohrung 12 eine Düsenspitze 40 einer Kartuschenpresse oder dergleichen geführt ist. Im Falle der Verwendung eines 2-Komponenten-Klebstoffs ist die Düsenspitze 40 als statischer Mischer ausgebildet. Die Klebstoffmasse 30' verteilt sich um die Einfüllbohrung 12 herum in der Vorkammer 16. Es wird vorzugsweise so viel Klebstoffmasse eingefüllt, dass die Vorkammer 16 unterhalb der durch die strichpunktierte Linie angedeuteten Befestigungsstelle 13 vollständig mit Klebstoffmasse 30' gefüllt ist.

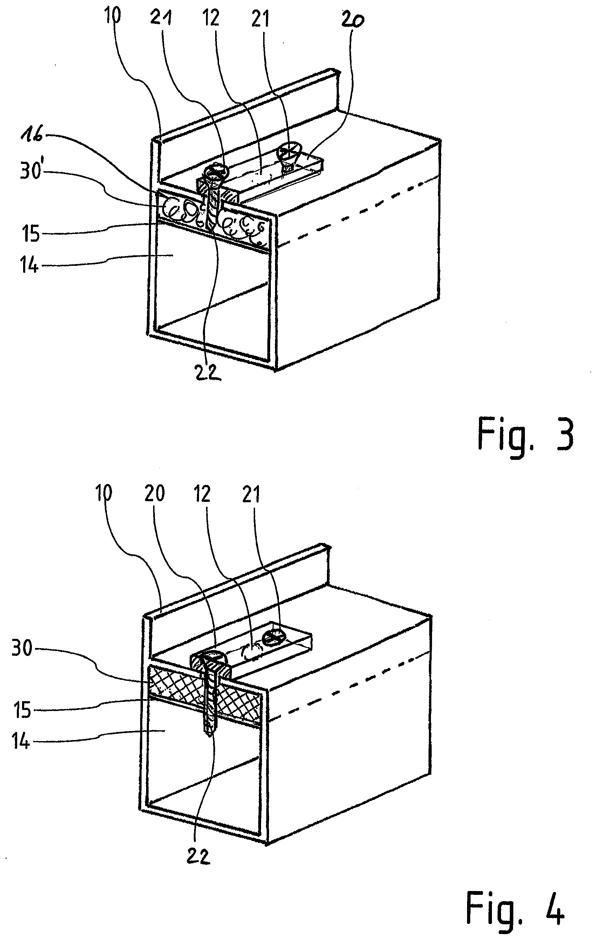

In Figur 3 ist das Beschlagteil 20 auf die Befestigungsstelle 13 aufgesetzt, und Befestigungsschrauben 21 werden durch Bohrungen im Beschlagteil 20 in die Befestigungsbohrungen 11 eingeschraubt. Die unregelmäßige Schraffur der Klebstoffmasse 30' in der Vorkammer 16 in Figur 3 soll kennzeichnen, dass im Moment des Einschraubens der Befestigungsschrauben 21 die Klebstoffmasse 30' noch nicht ausgehärtet ist, wenn die Schraubenschäfte 22 in die Klebstoffmasse 30' eindringen.

Figur 4 zeigt den fertig montierten Zustand. Die Befestigungsschrauben 21 sind vollständig abgesenkt. Die Schraubenschäfte 22 liegen in der Klebstoffmasse 30, die inzwischen ausgehärtet ist, wie durch die Kreuzschraffur angedeutet. Der Klebstoff bildet eine Schraubenauszugverstärkung, also ein stoff- und formschlüssig mit der Befestigungsschraube 21 verbundenes Gegenlagerelement. Außerdem hat sich der Schraubenschaft 22 noch in die Zwischenwandung 15 eingedreht. Das Gewinde am Schraubenschaft 22 ist in diesem Zustand vollständig in die Klebstoffmasse 30 eingebettet, d.h. die Klebstoffmasse 30 erstreckt sich bis an den Kern des Schraubenschaftes 22. Hierdurch wird eine hohe Auszugsfestigkeit gegeben.

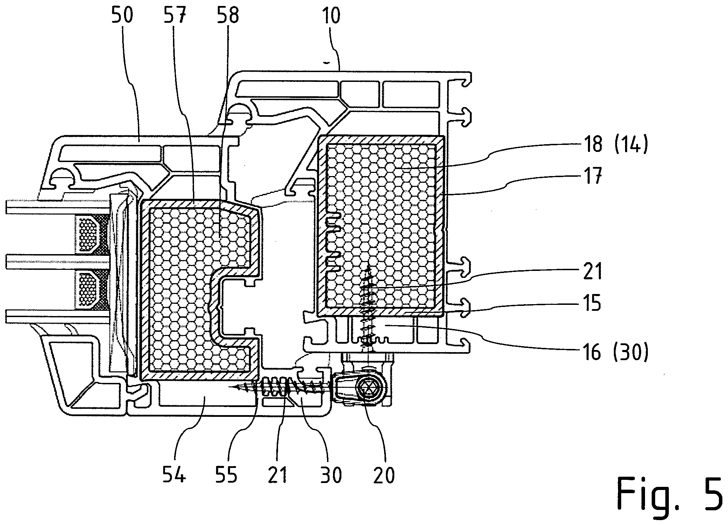

Figur 5 zeigt gegenüber den eher schematischen Darstellungen der Figuren 1 bis 4 nun ein detailliiertes Anwendungsbeispiel. Hier ist zwischen einem Rahmenprofil 10 und einem Flügelprofil 50 ein Flügellager 20 als Beschlagteil montiert. Am Rahmenprofil 10 ist die Hohlkammer 14 mit einer glasfaserverstärkten Profilschicht 17 ausgekleidet. Außerdem ist die Hohlkammer 14 mit einer wärmeisolierenden Füllung 18 versehen. Ein Zwischensteg 15 trennt eine Vorkammer 16 ab, die mit Klebstoffmasse 30 gefüllt ist. Eine erste Befestigungsschraube 21 greift durch das Flügellager 20 in die ausgehärtete Klebstoffmasse 30 ein.

Das Flügelprofil 50 ist ähnlich aufgebaut. Auch dieses besitzt einen glasfaserverstärkten Kern 57, der einen Hohlraum 54 umgibt. Der Hohlraum 54 ist mit einer wärmeisolierenden Füllung 58 ausgefüllt. Eine zweite Befestigungsschraube 21 greift durch das Flügellager 20 in die Klebstoffmasse 30 und in einen Zwischensteg 55. Die ausgehärteten Klebstoffmassen 30 bilden klotzartige Gegenlagerelemente, die eine hohe Auszugsfestigkeit bewirken.

## Patentansprüche

1. Verfahren zur Befestigung eines Beschlagteils (20) an einem aus Kunststoffhohlprofilabschnitten (10, 50) bestehenden Fenster oder einer Tür, mit wenigstens folgenden Schritten:
- Verbinden von Kunststoffhohlprofilabschnitten (10, 50) zu einem Rahmen oder Flügel;
- Anordnen eines Lochbilds für die Befestigungsschrauben (21) und/oder Zentriervorsprünge des Beschlagteils (20) auf dem Rahmen oder dem Flügel,
- Einbringen wenigstens einer Befestigungs- und Einfüllbohrung (11, 12) im Lochbild des Beschlagteils (20) oder in einem dazu direkt benachbarten Flächenbereich;
- Einbringen einer schnell aushärtenden, pastösen oder hoch viskosen Klebstoffmasse (30') durch die wenigstens eine Befestigungs- und Einfüllbohrung (11, 12) in eine Hohlkammer (14, 16, 54) des Rahmens oder Flügels im Umgebungsbereich der Befestigungspunkte oder -bohrungen (11) für die Befestigungsschrauben (21) ;
- Aufsetzen des Beschlagteils (20) und Einschrauben der Befestigungsschrauben (21) in den Rahmen und/oder den Flügel bis in die Klebstoffmasse (30');
- Aushärtenlassen der Klebstoffmasse (30') zur Bildung eines Gegenlagerelements, das die in die Hohlkammer (15, 16, 54) ragenden Schraubenschäfte (22) der Befestigungsschrauben (21) umschließt,

2. Verfahren nach Anspruch 1, **dadurch gekennzeichnet, dass** für die Befestigungsschrauben (21) und/oder für Zentriervorsprünge des Beschlagteils (20)jeweils eine Befestigungsbohrung (11, 12) in den Rahmen oder in den Flügel entsprechend dem Lochbild des Beschlagteils (20) eingebracht werden,

3. Verfahren nach Anspruch 2, **dadurch gekennzeichnet, dass** der Bohrungsdurchmesser dem Kerndurchmesser einer Befestigungsschraube (21) mit selbstschneidendem Gewinde oder dem Durchmesser des Zentriervorsprungs entspricht.

4. Verfahren nach einem der Ansprüche 1 bis 3 2, **dadurch gekennzeichnet, dass** ein Zwei-Komponenten-Polyurethan-Reaktionsklebstoff als Klebstoffmasse (30') verwendet wird.

5. Verfahren nach einem der Ansprüche 1 bis 4, **dadurch gekennzeichnet, dass** zumindest die für den Durchtritt der Befestigungsschrauben (21) vorgesehene Wandung des Kunststoffhohlprofils (10, 50) an ihrer Innenseite eine glasfaserverstärkte Schicht (17, 57) aufweist oder aus glasfaserverstärktem Kunststoff besteht.

6. Verfahren nach einem der Ansprüche 1 bis 5, **dadurch gekennzeichnet, dass** ein Kunststoffhohlprofil (10) verwendet wird, in dem unterhalb der für das Beschlagteil (20) vorgesehenen Befestigungsstelle eine Vorkammer (16) ausgebildet ist, die durch einen Zwischensteg (15) von der übrigen Hohlkammer (14) getrennt ist.

## Claims

1. Method for fastening a fitting part (20) to a window or a door composed of plastics hollow profile sections (10, 50), with at least the following steps:
- connecting plastics hollow profile sections (10, 50) to form a frame or ring;
- arranging a hole pattern for the fastening screws (21) and/or centring projections of the fitting part (20) on the frame or the ring,
- introducing at least one fastening and filling bore (11, 12) in the hole pattern of the fitting part (20) or in a surface region directly adjacent thereto;
- introducing a rapidly curing, pasty or highly viscous adhesive compound (30') through the at least one fastening and filling bore (11, 12) into a hollow chamber (14, 16, 54) of the frame or ring in the surrounding region of the fastening points or fastening bores (11) for the fastening screws (21);
- placing the fitting part (20) thereon and screwing the fastening screws (21) into the frame and/or the ring until they reach the adhesive compound (30');
- allowing the adhesive compound (30') to cure in order to form a counter bearing element which surrounds the screw stems (22) of the fastening screws (21), the screw stems protruding into the hollow chamber (15, 16, 54).

2. Method according to Claim 1, **characterized in that**, for the fastening screws (21) and/or for centring projections of the fitting part (20), respective fastening bores (11, 12) are introduced into the frame or into the ring in a manner corresponding to the hole pattern of the fitting part (20) .

3. Method according to Claim 2, **characterized in that** the bore diameter corresponds to the core diameter of a fastening screw (21) having a self-tapping thread or to the diameter of the centring projection.

4. Method according to one of Claims 1 to 3 2, **characterized in that** a two-component polyurethane reaction adhesive is used as the adhesive compound (30').

5. Method according to one of Claims 1 to 4, **characterized in that** at least the inner side of the wall of the plastics hollow profile (10, 50) that is provided for the passage of the fastening screws (21) has a glass-fibre-reinforced layer (17, 57) or is composed of glass-fibre-reinforced plastic.

6. Method according to one of Claims 1 to 5, **characterized in that** use is made of a plastics hollow profile (10) in which an antechamber (16) is formed below the fastening point provided for the fitting part (20), said antechamber being separated from the rest of the hollow chamber (14) by an intermediate web (15).

## Revendications

1. Procédé de fixation d'une pièce de ferrure (20) sur une fenêtre ou une porte constituée de parties de profilé creux en matière synthétique (10, 50), comprenant au moins les étapes suivantes :
- liaison de parties de profilé creux en matière synthétique (10, 50) à un cadre ou battant ;
- agencement d'un gabarit de trous pour les vis de fixation (21) et/ou de saillies de centrage de la pièce de ferrure (20) sur le cadre ou le battant,
- introduction d'au moins un alésage de fixation et de remplissage (11, 12) dans le gabarit de trous de la pièce de ferrure (20) ou dans une région de surface directement adjacente à celui-ci ;
- introduction d'une substance adhésive (30') pâteuse ou hautement visqueuse durcissant rapidement à travers ledit au moins un alésage de fixation et de remplissage (11, 12) dans une chambre creuse (14, 16, 54) du cadre ou battant dans la région environnante des points ou alésages de fixation (11) pour les vis de fixation (21) ;
- placement de la pièce de ferrure (20) et vissage des vis de fixation (21) dans le cadre et/ou le battant jusque dans la substance adhésive (30') ;
- durcissement de la substance adhésive (30') pour former un élément de butée qui entoure les tiges de vis (22) des vis de fixation (21) faisant saillie dans la chambre creuse (15, 16, 54).

2. Procédé selon la revendication 1, **caractérisé en ce qu'**un alésage de fixation (11, 12) est respectivement ménagé dans le cadre ou dans le battant de manière correspondante au gabarit de trous de la pièce de ferrure (20) pour les vis de fixation (21) et/ou pour des saillies de centrage de la pièce de ferrure (20).

3. Procédé selon la revendication 2, **caractérisé en ce que** le diamètre d'alésage correspond au diamètre de noyau d'une vis de fixation (21) à filetage autotaraudeur ou au diamètre de la saillie de centrage.

4. Procédé selon l'une des revendications 1 à 3 2, **caractérisé en ce qu'**un adhésif de réaction en polyuréthane à deux composants est utilisé en tant que substance adhésive (30').

5. Procédé selon l'une des revendications 1 à 4, **caractérisé en ce qu'**au moins la paroi du profilé creux en matière synthétique (10, 50) prévue pour le passage des vis de fixation (21) comprend sur son côté intérieur une couche (17, 57) renforcée par des fibres de verre ou est constituée d'une matière synthétique renforcée par des fibres de verre.

6. Procédé selon l'une des revendications 1 à 5, **caractérisé en ce qu'**un profilé creux en matière synthétique (10) est utilisé, dans lequel une pré-chambre (16) est formée en dessous du point de fixation prévu pour la pièce de ferrure (20), laquelle pré-chambre est séparée du reste de la chambre creuse (14) par une nervure intermédiaire (15).
